(19) Europäisches Patentamt
European Patent Office
Office européen des brevets

(11) **EP 4 495 720 A1**

(12) **EUROPÄISCHE PATENTANMELDUNG**

(43) Veröffentlichungstag:
**22.01.2025 Patentblatt 2025/04**

(21) Anmeldenummer: **23186327.5**

(22) Anmeldetag: **19.07.2023**

(51) Internationale Patentklassifikation (IPC):
**G05B 19/406** *(2006.01)* **B23K 26/03** *(2006.01)*

(52) Gemeinsame Patentklassifikation (CPC):
**G05B 19/406; B23K 26/062; B23K 26/38;**
G05B 2219/34464

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Bystronic Laser AG**
**3362 Niederönz (CH)**

(72) Erfinder: **FAHRNI, Christoph**
**3363 Oberönz (CH)**

(74) Vertreter: **Schwarz, Claudia**
**Schwarz + Kollegen**
**Patentanwälte**
**Heilmannstraße 19**
**81479 München (DE)**

(54) **VERFAHREN UND VORRICHTUNG ZUM OPTIMIEREN EINES LOC-WATCHDOGS ( LOSS OF CUT-WATCHDOG) FÜR EINE LASERSCHNEIDMASCHINE**

(57) Die vorliegende Erfindung betrifft ein Verfahren, eine Vorrichtung und ein System zum Optimieren eines LOC-Watchdogs (W), der die Wahrscheinlichkeit eines Schneidverlustes, LOC, abschätzt. Es können zwei unterschiedliche neuronale Netzwerke verwendet werden.

FIG. 2

EP 4 495 720 A1

**Beschreibung**

Die vorliegende Anmeldung betrifft ein Verfahren zum Optimieren eines LOC-Watchdogs für eine Laserschneidmaschine, eine entsprechende Vorrichtung, ein System und ein Computerprogramm.

Das Schneiden von Blechen auf autonomen Laserschneidmaschinen erfordert einen zuverlässigen und stabilen Laserprozess. Aufgrund von unterschiedlichen Ereignissen kann es vorkommen, dass der Laserprozess unterbrochen oder nicht wie geplant ausgeführt wird, so dass die Teile nicht oder nicht vollständig vom restlichen Blech getrennt werden können. Die Lieferung verzögert sich, die Reproduktion der Teile ist zeitaufwändig und verursacht zusätzliche Kosten. Dies gilt es zu vermeiden. Schneidverluste treten unter anderem auf, wenn die Laserschnittfolge durch Schmelzen/Ausblasen zu einem nicht trennenden Prozess führt. Es kann spontane Gründe für einen Schneidverlust geben, wie z.B. schlechter Gitterzustand, verschmutzte Blechoberfläche, veränderte Materialeigenschaften, Laserabnutzung, Temperatur, falsch ausgerichtete Düse, abgenutzte Düse und/oder erzwungene Gründe, wie z.B. reduzierte Laserleistung, erhöhte Geschwindigkeit, falsche Düse.

Im Stand der Technik ist es bekannt, Laserschneidmaschinen mit einem Cut-Control-Modul auszubilden, um den Schneidverlust mit einem hochdynamischen optischen Sensor, der koaxial die Emission des Prozesslichts misst, zu erfassen. Der aktuelle Laserschneidkopf kann ein Faserschneidkopf sein und verfügt über einen sehr empfindlichen koaxialen Fotodiodendetektor oder einen anderen optischen Sensor zur Messung des Emissionslichts des Laserprozesses. Die Signale des oder der optischen Sensoren wurden im Stand der Technik von einem Schneidverlustdetektor verarbeitet, der auf einem Schwellenwertvergleich basiert. Bei allen Systemen ($CO_2$, Faser; Fotodiode, Kamera) müssen im Vorfeld im Stand der Technik manuell Schwellenwerte programmiert/konfiguriert werden. Sie werden zum Vergleich des erfassten Sensorsignals, das das Prozesslicht repräsentiert, verwendet.

Grundsätzlich erkennt die Prozesslogik aus dem Stand der Technik einen Schneidverlust während des Schneidens anhand des Überschreitens eines voreingestellten Schwellenwerts mit einer gewissen Wahrscheinlichkeit. D.h. nicht jeder festgestellte Fall eines Schneidverlusts ist ein tatsächlicher Schneidverlust. Wird auf Grund eines (ggf. vermeintlich) festgestellten Schneidverlusts der Laser abgeschaltet, erfolgt direkt danach ein Nachschneiden. Der Nachschneidprozess beginnt an einer festen, vorbestimmten Position in Bezug auf die Abrissposition, z.B. einige Millimeter vor dem Schneidverlustereignis. Der Nachschneidprozess wird zudem unter Verwendung von fest eingestellten, sicheren Prozessparametern ausgeführt (z.B. mit reduziertem Vorschub). Nach der Nachschneidephase wird der normale Schneidprozess fortgesetzt.

Aufgrund der sehr großen Varianz der verschiedenen Laserverfahren ist es schwierig, einen generischen Schneidverlustdetektor zu entwickeln, der für alle unterschiedlichen Laserverfahren ausgelegt und geeignet ist und der auf Schwellenwerten basiert. Deshalb haben die bekannten Methoden den Nachteil, dass es bei der Erkennung von Schneidverlusten bislang zu falsch positiven Bewertungen kommt. Dies wiederum bedeutet, dass der Laserschneidprozess unterbrochen wird, der Schneidkopf an eine Rücksetzposition für einen vermeintlich erkannten Schneidverlust in der Kontur zurückgesetzt wird und nochmals nachgeschnitten wird und dies, obwohl gar kein Schneidverlust aufgetreten war. Dies erhöht die Schneidzeit und verschlechtert die Performanz des Schneidprozesses.

Weiterhin müssen die Schwellenwerte jeweils manuell von Schneidspezialisten angepasst werden, um die Empfindlichkeit und Präzision der Erkennung zu verbessern. Selbst ein Schneidrost kann ein höheres Emissionssignal erzwingen, so dass der Abstand zwischen "normalem" Schneiden und Schneidverlust recht gering ist (z. B. Faktor 1,5). Da der Prozess zudem fluktuiert, ist die Intensität des erfassten Signals nie kontinuierlich. Auch schwankende Düsenabstände wirken sich direkt auf die Intensität des Signals der Sensoren aus. Wenn der Schwellenwert zu hoch ist, somit ein LoC nicht erkannt wird, wird das Blech verschwendet, und das Schutzglas oder die Düse können durch Schlacke/Funken beschädigt werden.

Die Aufgabe der vorliegenden Erfindung liegt daher darin, das bisherige System und Verfahren zu verbessern. Insbesondere soll das Erkennen eines Schneidverlustes in Form von nicht vollständig durchtrennten Werktücken verbessert und insbesondere zuverlässiger gemacht und auch weiter automatisiert werden.

Diese Aufgabe wird durch die beiliegenden Patentansprüche gelöst, insbesondere durch ein Verfahren, eine Vorrichtung, ein System und ein Computerprogramm. Vorteilhafte Weiterentwicklungen finden sich in den Unteransprüchen.

Gemäß einem ersten Aspekt bezieht sich die Erfindung auf ein Verfahren zum Optimieren eines LOC-Watchdogs für eine Laserschneidmaschine. Das Verfahren kann folgende Verfahrensschritte umfassen:

- Einlesen von ersten optischen Signalen während eines Schneidprozesses;
- Auswerten der eingelesenen ersten optischen Signale mit dem LOC-Watchdog, der dazu ausgelegt ist, eine Erkennungsmethode auszuführen, um eine Wahrscheinlichkeit abzuschätzen, ob bei einem Schneidprozess ein Schneidverlust, insbesondere in Form von unvollständigen geschnittenen Werkstücken auftritt oder aufgetreten ist und diese Abschätzung als Zwischenergebnis bereitzustellen;
- Falls der LOC-Watchdog das Auftreten eines Schneidverlustes im Zwischenergebnis als wahrscheinlich abgeschätzt hat:

- Unterbrechen des Schneidprozesses und Ausgeben eines Nachschneidebefehls zur Ausführung eines Nachschneideprozesses;
- Einlesen von zweiten optischen Signalen während des Nachschneideprozesses;

  - Anwenden einer Analysemethode auf die eingelesenen ersten und zweiten optischen Signale, um zu bestimmen, ob es sich bei dem Zwischenergebnis des LOC-Watchdog um ein richtig-positives oder falsch-positives Zwischenergebnis handelt;

- Optimieren der Erkennungsmethode des LOC-Watchdog, in Abhängigkeit von oder in Antwort auf ein Ergebnis der Analysemethode.

Ein Loss of Cut (LOC, Schneidverlust) umfasst unterschiedliche nicht erwünschte Schneidergebnisse. Insbesondere sind "unvollständig geschnittene Werkstücke" oder "unvollständiger Schnitt" Schneidverluste im Sinne eines sogenannten Loss of Cut. Ein Schneidverlust kann insbesondere ein Strahlabriss sein oder durch diesen verursacht sein. Ein Loss of Cut kann vielfältige Ursachen haben. Ein Laser Schneidprozess bzw. Laserschnitt dient hier zur vollständigen Durchtrennung eines Werkstücks. Je nach Schneidplan, können unterschiedliche Konturen in dem Werkstück geschnitten oder ausgeschnitten werden. Ein unvollständiger Schnitt kennzeichnet nun die Fälle, in denen das Werkstück nicht vollständig durchtrennt wurde, so dass z.B. ein Steg oder Restmaterial im Schnittspalt verbleibt.

Das Werkstück kann flächig (2-dimensional) oder 3-dimensional (z.B. in Form eines Hohlkörpers, insbesondere eines Rohrs) sein. Die Werkstücke können z.B. aus Metall oder einer Legierung oder Kombinationen davon bestehen. Bei den Werkstücken kann es sich z.B. um Blechteile oder Blechrohre handeln.

Der Schneidprozess dient zur Durchtrennung und insbesondere zur vollständigen Durchtrennung bzw. zum Schneiden des Werkstücks und wird gemäß Befehlen einer Steuerung ausgeführt. Der Schneidprozess erfolgt nach einem Schneidplan, der z.B. bestimmte Konturen auf z.B. einem Blech vorgeben kann. Nach dem Schneiden einer z.B. Blechtafel können die unterschiedlich konturierten, fertig geschnittenen Teile von dem verbleibenden Restblech getrennt werden.

Das Nachschneiden bzw. der Nachschneideprozess dient der Vervollständigung des Schneidvorgangs bei einem detektierten LOC. Das Nachschneiden erfolgt jeweils annähernd und insbesondere exakt auf derselben Schneidkontur wie der vorhergehende Schneidvorgang. Das Schneiden und das Nachschneiden sind somit vorzugsweise zwei zeitlich nacheinander ausgeführte Prozesse, die vorzugsweise auf derselben Trajektorie ausgeführt werden. Insbesondere kann der Anschnitt bei dem Nachschneiden unmittelbar vor dem Abriss (bzw. der Position, an der der Abriss detektiert worden ist) erfolgen.

Die Laserschneidmaschine umfasst einen Laser. Bei dem Laser handelt es sich um einen Hochleistungslaser, insbesondere zur Metallverarbeitung, der im Leistungsbereich von mehr als 1 kW und vorzugsweise im Bereich von 1 - 100 kW, insbesondere 4 - 40 kW, betrieben wird. Die Laserschneidmaschine kann vorzugsweise Teil einer Laserschneidanlage sein mit einem Be- und Entladesystem, einem Automatisierungssystem und/oder einem automatischen Sortiersystem.

Die Laserschneidanlage kann eine optische Sensoranordnung umfassen. Vorzugsweise ist die optische Sensoranordnung an dem Laser, insbesondere an einem Schneidkopf des Lasers angeordnet. Die optische Sensoranordnung umfasst zumindest einen (optischen) Sensor. Der Sensor kann eine Kamera sein oder umfassen, insbesondere eine CMOS- und/oder eine CCD-Kamera. Bei dem optischen Sensor kann es sich z.B. um eine In-prozess Kamera handeln. Bei dem optischen Sensor kann es sich alternativ oder kumulativ um eine 2D-Kamera handeln. Alternativ oder zusätzlich kann der optische Sensor eine 3D-Kamera sein, wie eine Stereo-Vision-Kamera, Lichtfeldkamera usw. Alternativ oder kumulativ kann die optische Sensoranordnung zumindest einen neuromorphischen Sensor (neuromorphische Kamera) umfassen. Der neuromorphische Sensor ist ein Ereignissensor, der ausgebildet ist, die sensorisch erfassten Lichtintensitätsunterschiede über die Zeit darzustellen. Der neuromorphische Sensor hat eine sehr hohe zeitliche Auflösung (im Microsekundenbereichen). Der neuromorphische Sensor kann als retinomorphischer Sensor ausgebildet sein. Alternativ oder kumulativ kann der optische Sensor zumindest eine Fotodiode sein oder umfassen und besonders bevorzugt eine Fotodiode und vorzugsweise ortsaufgelöst ein 2D-Sensor, z.B. eine CMOS-Kamera. Alternativ oder kumulativ kann der optische Sensor bedarfsweise aktiviert oder deaktiviert werden. Der optische Sensor dient zur Erfassung von Bildern. Der optische Sensor dient insbesondere zur Erfassung des Prozesslichts beim Schneiden. Alternativ oder kumulativ kann der optische Sensor Teil eines optischen System aus optischen (z.B. Umlenkspiegeln, Linsen, optischen Filtern etc.) und optional elektronischen Komponenten (Halbleiter, Platine, etc.) sein. Die optischen und/oder elektronischen Komponenten sind vorzugsweise ebenfalls im Schneidkopf angeordnet. Die optischen Komponenten können zumindest einen optischen Sensor und/oder eine Lichtquelle umfassen. Die Lichtquelle kann wahlweise bei Aktivierung des optischen Sensors aktiviert werden, um mit anderen Worten, beleuchtete oder unbeleuchtete Bilder zu erfassen.

Bei dem Nachschneidebefehl (insbesondere als Bestandteil von Steuersignalen der SPS (speicherprogrammierbaren Steuerung)) handelt es sich um einen elektronischen Befehl zur Ansteuerung des Lasers (an/aus; sowie sämtlicher notwendiger Aktoren und/oder Motoren). Der Nachschneidebefehl kann mehrere Befehlsabschnitte umfassen. Insbesondere kann er eine Positionsangabe umfassen, an welcher Position das Nachschneiden und/oder Lead-In erfolgen soll. Die Positionsangabe wird vorzugsweise dynamisch berechnet und kann sich von Nachschneideprozess zu Nachschneideprozess unterscheiden. Der Nachschneidebefehl kann ein Nachschneidesignal, insbesondere zur Aktivierung des Lasers während dem Nachschneiden und/oder optional Nachschneideparameter umfassen. Die Nachschneidparameter umfassen Laserleistung, Vorschub, Fokuslagen, Fokusdurchmesser, Frequenz und Pulsbreite bei einem gepulsten Laser, Düsenabstand und Schneidgasdruck. Das Nachschneidesignal kann somit binär sein und vorgeben, wann auf der Trajektorie der Laser aktiviert oder deaktiviert sein soll.

Das Verfahren kann vorzugsweise computer-implementiert sein. Das Verfahren dient zur Optimierung und/oder Regelung eines elektronischen Bausteins, nämlich des LOC-Watchdogs. Mit anderen Worten, kann der LOC-Watchdog kontinuierlich verbessert werden. Die Verbesserung wird mittels eines datengetriebenen Verfahrens berechnet und dient insbesondere dazu, falsch positive LOC-Abschätzungen zu identifizieren und zu eliminieren. Mit dem Verfahren kann erreicht werden, dass ein Nachschneideprozess nur noch in richtig positiven Fällen ausgeführt wird.

Der LOC-Watchdog ist ein elektronischer Baustein. Der LOC-Watchdog kann in Software und/oder Hardware implementiert sein. Der LOC-Watchdog ist ausgebildet, eine Erkennungsmethode auszuführen und ein Zwischenergebnis bereitzustellen. Das Zwischenergebnis indiziert, ob ein Schneidverlust (LOC) in Form einer unvollständigen Durchtrennung auftritt oder aufgetreten ist. Das Auswerten der ersten optischen Signale mit dem LOC-Watchdog erfolgt vorzugsweise, indem zumindest die Erkennungsmethode angewendet wird. Vorzugsweise wird die Erkennungsmethode des LOC-Watchdog kontinuierlich und/oder während des Schneidprozesses ausgeführt. Alternativ oder kumulativ kann die Erkennungsmethode auch während des Nachschneideprozesses ausgeführt werden. Die Erkennungsmethode kann als maschinelles Lernverfahren ausgebildet sein und/oder ein zweites neuronales Netz umfassen.

Alternativ oder kumulativ kann die Erkennungsmethode als in Software implementierter Vergleichsprozess ausgebildet sein, der die erfassten (ersten) optischen Signale, die insbesondere die Intensität des Prozessleuchtens repräsentieren, mit Schwellenwerten vergleicht und bei Über- oder Unterschreitung eines Referenzsignals oder Referenzbereichs ein LOC-Ereignis (Wahrscheinlichkeit für einen LOC ist vorhanden) ausgibt.

Alternativ oder kumulativ kann die Erkennungsmethode zusätzlich auch eine Rücksetzposition und/oder ein Aktivierungsintervall zur Aktivierung des Lasers auf der Nachschneideprozessbahn berechnen. Damit wird es möglich, den Laser bei dem Nachschneideprozess abschnittsweise zu aktivieren und/oder zu deaktivieren. Das Nachschneiden kann somit anteilig auf der Nachschneidbahn ausgeführt werden. Der technische Effekt ist, dass der Laser nur an der Stelle aktiviert bzw. eingeschaltet wird, wo die Wahrscheinlichkeit für einen LOC hoch ist. Dies spart Energie und Kosten. Die Berechnung der Rücksetzposition kann vorzugsweise in Abhängigkeit von der Position des erkannten Schneidverlustes bzw. LOC-Ereignisses bzw. der erkannten Abrissposition erfolgen. Vorteilhafterweise kann die Berechnung der Rücksetzposition alternativ oder ergänzend in Abhängigkeit einer Auswertung der ersten und/oder zweiten optische Signale und/oder in Abhängigkeit von weiteren Parametern des Schneidprozesses, insbesondere der Geschwindigkeit, erfolgen. Damit kann die Rücksetzposition flexible an den jeweiligen Anwendungsfall und/oder die Ursache für den Schneidverlust berechnet oder gewählt werden. Die Rücksetzposition muss nicht zwangsläufig mit dem Beginn des Nachschneideprozesses übereinstimmen.

Die Laserschneidanlage und insbesondere die Laserschneidmaschine kann den LOC-Watchdog umfassen oder mit diesem in Datenaustausch stehen, insbesondere falls dieser auf einer externen Recheneinheit implementiert sein sollte. Der LOC-Watchdog liefert ein Zwischenergebnis, das eine Wahrscheinlichkeit abschätzt, ob ein Schneidverlust aufgetreten ist oder auftritt oder auftreten wird. Falls die Wahrscheinlichkeit einen vorbestimmbaren Schwellenwert übersteigt oder bei Eintreten eines vordefinierbaren Ereignisses bzw. falls vordefinierbaren Bedingungen erfüllt sind, wird der Laserschneidprozess gestoppt und es wird ein Nachschneidebefehl ausgelöst. Der LOC-Watchdog beeinflusst somit bzw. steuert den Schneidprozess insbesondere dadurch, dass er unter bestimmten Umständen oder Bedingungen Nachschneidbefehle auslöst, die dann auf der Laserbearbeitungsmaschine, insbesondere dem Schneidkopf, zur Ausführung geladen werden. Kann der LOC-Watchdog nun mit dem Vorschlag dieser Anmeldung verbessert oder optimiert - und insbesondere geregelt -werden-, so kann damit indirekt auch der Laserschneidprozess und damit die Laserschneidanlage (und insbesondere die Laserschneidmaschine) geregelt werden, indem beispielsweise seltener Nachschneidprozesse ausgelöst werden, nämlich nur dann, wenn das Zwischenergebnis sich als richtig positiv erweist. Der Nachschneidbefehl kann Nachschneidparameter umfassen, die kennzeichnen, wie der Nachschneidprozess ausgeführt werden soll, wie z.B. Vorschub, Leistung etc.

Die Analysemethode ist ein vorzugsweise in Software implementiertes Verfahren. Die Analysemethode ist dazu ausgebildet, das vom LOC-Watchdog bereitgestellte Zwischenergebnis zu analysieren und insbesondere dahingehend zu analysieren, ob es sich um ein falsch-positives oder richtig-positives Zwischenergebnis handelt. Die Analysemethode kann als maschinelles Lernverfahren ausgebildet sein und/oder zumindest ein erstes neuronales Netzwerk umfassen.

Die Analysemethode kann dazu ausgelegt sein, die Erkennungsmethode des LOC-Watchdog zu verbessern und insbesondere nachzutrainieren. Die Analysemethode umfasst ein datengetriebenes Verfahren. Die Verbesserung oder Optimierung der Erkennungsmethode kann auf Basis einer ausgegebenen Optimierungsanweisung erfolgen, die - insbesondere falls die Erkennungsmethode als neuronales Netzwerk ausgebildet ist - auch als Trainingsanweisung ausgebildet sein kann. Das Optimieren der Erkennungsmethode des LOC-Watchdog, insbesondere das Training, kann ereignisbasiert getriggert werden. Das Ereignis kann im Vorfeld konfiguriert werden, z.B. zeit-basiert (in vorkonfigurierbaren Zeitabständen) und/oder bei Vorliegen einer neuen Optimierungsanweisung oder eine Kombination von beiden oder anderen Kriterien. Die Analysemethode kann somit verwendet werden, um die Erkennungsmethode des LOC-Watchdog nachzutrainieren. Die Analysemethode kann insbesondere verwendet werden, die ersten optischen Signale der Erkennungsmethode, insbesondere, falls dieses als neuronales Netzwerk implementiert ist, zu labeln bzw. zu kennzeichnen. Damit kann die Treffsicherheit bzw. die Qualität des vom LOC-Watchdog bereitgestellten Zwischenergebnisses verbessert werden. Ein Nachschneiden erfolgt nach dem Nachtraining des LOC-Watchdog nur noch in richtig-positiven Fällen.

Es kann vorgesehen sein, dass keine Optimierungsanweisung oder eine leere Optimierungsanweisung erzeugt und/oder ausgegeben wird, falls die Analysemethode erkannt hat, dass es sich bei dem Zwischenergebnis um ein richtig positives Zwischenergebnis handelt. Es kann vorgesehen sein, dass die erfassten Daten, umfassend die ersten und/oder zweiten optischen Daten und/oder die Rücksetzposition und/oder das Ergebnis des LOC-Watchdog und/oder das Ergebnis der Analysemethode nur dann gespeichert werde, wenn die Analysemethode bestimmt hat, dass es sich bei dem Zwischenergebnis um ein falsch positives Ergebnis handelt.

Vorzugsweise sind die ersten und die zweiten optischen Signale bei der Anwendung der Analysemethode positionskorreliert. Der Nachschneideprozess erfolgt zeitlich versetzt und insbesondere unmittelbar nach dem Erkennen eines LOC bzw. nach dem Stoppen des Schneidprozesses.

Alternativ oder kumulativ kann der Nachschneideprozess exakt auf derselben Schneidbahn erfolgen wie der Schneidprozess, der unterbrochen wurde. Damit wird es möglich, die Qualität des Schneidprozesses zu verbessern.

Alternativ oder kumulativ kann der Nachschneideprozess in derselben Richtung und/oder in entgegengesetzter Richtung wie der Schneidprozess ausgeführt werden. Der Nachschneideprozess kann beim Zurücksetzen des Laserschneidkopfes und/oder beim erneuten Nachfahren der Kontur (in gleicher Richtung, wie der Schneidprozess) erfolgen.

Alternativ oder kumulativ kann der Laser während des Zurücksetzens, also während der Fahrt bis zum Beginn der Nachschneideposition, ausgeschaltet werden, insbesondere wenn das Nachschneiden in derselben Richtung ausgeführt wird. Die Nachschneideposition liegt typischerweise auf der Schneidbahn und vor der Abrissstelle (an der der LOC detektiert wurde). Wenn das Nachschneiden in entgegengesetzter Richtung erfolgt, dann kann der Laser nach Finalisieren des Nachschneideprozesses und bei Umkehr der Bewegungsrichtung auf der Schneidbahn (wieder in Richtung des Schneidprozesses) ausgeschaltet werden.

Das Ausschalten des Lasers während Abschnitten des Nachschneideprozesses (insbesondere während der Hinfahrt oder Rückfahrt zur Nachschneideposition, je nachdem, auf welcher Bahn der Nachschneidprozess ausgeführt werden soll) führt vorteilhafterweise zu einer geringeren Schadenanfälligkeit im Maschinenunterraum.

Der Laser kann also insbesondere erst zurückgesetzt werden auf die Nachschneideposition, um dann wieder in derselben Richtung aktiviert zu werden für den Nachschneideprozess. Alternativ oder kumulativ kann der Laser bereits schon beim Zurücksetzen in die Nachschneideposition für den Nachschneidprozess aktiviert werden.

Die Rücksetzposition gibt an, bis zu welcher Position der Schneidkopf insbesondere auf einer Rücksetzbahn zurückgesetzt wird, um zumindest einen Abschnitt einer Trajektorie gemäß dem Schneidplan erneut abzufahren (Nachschneideprozess). Die Rücksetzbahn kann der Trajektorie entsprechen. Insbesondere bei großen Konturen oder bei sehr unstetigen Bahnen (gemäß Schneidplan) oder bei langen Nachschneideprozessen kann die Rücksetzbahn von der Schneidbahn (zu schneidende Trajektorie) abweichen. Insbesondere kann die Rücksetzbahn der direkte Weg von der aktuellen Schneidkopfposition zur Rücksetzposition sein.

Die Rücksetzposition zur Ausführung des Nachschneideprozesses kann dynamisch und in Antwort auf das Ergebnis der Erkennungsmethode und/oder der Analysemethode angepasst werden. Insbesondere ist die Analysemethode, die ein neuronales Netzwerk umfassen kann, so ausgelegt sein, dass sie nicht nur die Angabe "true positive/false positive" für jeweils ein Zwischenergebnis des LOC-Watchdog ausgibt, sondern auch eine Start-Position für den Nachschnitt (Nachschneideposition). Alternativ oder kumulativ können noch weitere Nachschneideparameter berechnet werden.

Alternativ oder kumulativ kann die Analysemethode ein erstes trainiertes neuronales Netzwerk sein oder umfassen. Die Analysemethode, insbesondere das trainierte neuronale Netzwerk bestimmt, ob es sich bei dem Zwischenergebnis des LOC-Watchdog um ein richtig-positives oder falsch-positives Zwischenergebnis handelt.

Alternativ oder kumulativ kann das Verfahren auch folgenden Schritt umfassen: Kennzeichen der ersten optischen Signale mit einem Label, das ausgewählt ist aus der Gruppe, bestehend aus: richtig positiv und falsch positiv.

Alternativ oder kumulativ kann die Analysemethode als post-processing und insbesondere nach dem Schneidprozess und/oder nach dem Nachschneideprozess ausgeführt werden. Die Analysemethode kann somit offline und zeitlich unabhängig von der Ausführung des Laserschneidprozesses ausgeführt werden. Die Analysemethode kann ein erstes trainiertes neuronales Netzwerk sein oder umfassen, welches bestimmt, ob es sich bei dem Zwischenergebnis um ein richtig-positives oder falsch-positives Zwischenergebnis handelt. Die Analysemethode kann somit zum (Nach-) Training der Erkennungsmethode dienen.

Alternativ oder kumulatv kann die Analysemethode auf einer anderen Recheneinheit ausgeführt werden als die Erkennungsmethode.

Alternativ oder kumulativ können die Eingangsdaten für das erste neuronale Netzwerk die ersten optischen Signale und die zweiten optischen Signale umfassen. Alternativ oder kumulativ können noch weitere Prozessgrößen als Eingangsgrößen dienen, wie etwa ein Cut-Controlsignal und/oder Schneidparameter (Vorschub, Laserleistung etc.).

Das Cut-Controlsignal umfasst ein Signal für die Intensität des Laserschneidprozesses pro Zeiteinheit. Das Cut-Controlsignal ermöglicht eine Zuordnung der ersten und/oder zweiten optischen Signale zu einem Zeitpunkt und/oder zu einem Punkt auf der Bahn der zu schneidenden Kontur (Trajektorie). Alternativ oder kumulativ können die Eingangsdaten neben dem Cut-Controlsignal weitere - insbesondere zeitkorrelierte - Signale umfassen, ausgewählt aus der Gruppe, bestehend aus:

- Bilder der Kamera,
- Ein Schneidrichtungssignal,
- Ein Vorschubsignal
- Ein Intensitätssignal, das die Intensität der applizierten Laserleistung repräsentiert, und
- Die ersten und/oder zweiten optischen Signale, in vorverarbeiteter Form.

Alternativ oder kumulativ können die Trainingsdaten für das erste neuronale Netzwerk die ersten optischen Signale in gekennzeichneter Form und die zweiten optischen Signale umfassen, wobei ein Erkennungskennzeichen der ersten optischen Signale in gekennzeichneter Form ein richtig-positiv Kennzeichen oder ein falsch-positiv Kennzeichen für zumindest die ersten optischen Signale ist.

Mit anderen Worten werden die Trainingsdaten für das ersten neuronale Netz anders gekennzeichnet, nämlich mit dem Erkennungszeichen (Erkennungslabel) als die Trainingsdaten für das zweite neuronale Netz (nämlich: Analysekennzeichen).

Je nach Implementierung des ersten neuronalen Netzwerkes können die zweiten optischen Signale in nicht-gekennzeichneter Form oder in gekennzeichneter Form verarbeitet werden.

Alternativ oder kumulativ kann das Erkennungszeichen automatisch erzeugt werden, insbesondere auf Basis einer Auswertung der zweiten optischen Signale und/oder auf Basis des Ergebnisses der Analysemethode.

Alternativ oder kumulativ kann die Abschätzung der Wahrscheinlichkeit eines möglichen Schneidverlustes durch den LOC-Watchdog online und insbesondere während des Schneidprozesses ausgeführt werden. Die Erkennungsmethode, die auf dem LOC-Watchdog implementiert ist kann insbesondere ein zweites trainiertes neuronales Netzwerk sein oder umfassen.

Alternativ oder kumulativ können die Eingangsdaten für das zweite neuronale Netzwerk die ersten optischen Signale umfassen. Je nach Implementierung des zweiten neuronalen Netzwerkes können die Eingangsdaten auch noch weitere Größen umfassen, so dass das zweite neuronale Netzwerk multi-dimensionale Features verarbeitet, um die Wahrscheinlichkeit für einen Schneidverlust (LOC) unter Berücksichtigung der weiteren Größen zu berechnen. Die weiteren Größen können Schneidparameter (z.B. Vorschub, Laserleistung, Materialart, Materialdicke etc.) und /oder Zustandsdaten für den Schneidprozess umfassen. Die Zustandsdaten können weitere sensorisch erfassten Signale umfassen, wie z.B. Cut-Controlsignale, und/oder Düsenabstand, akustische Signale.

Alternativ oder kumulativ können die Trainingsdaten für das zweite neuronale Netzwerk die ersten optischen Signale in gekennzeichneter Form umfassen. Die Kennzeichnung erfolgt mit einem Analysekennzeichen und wird auf die ersten optischen Signale angewendet, um ersten optische Signale in gekennzeichneter Form zu erhalten. Das Analysekennzeichen repräsentiert insbesondere eine Wahrscheinlichkeit für einen Schneidverlust ist.

Alternativ oder kumulativ können die ersten optischen Signale in einem ersten Vorverarbeitungsschritt einer Vorverarbeitung unterzogen werden, bevor die Erkennungsmethode angewendet wird und/oder wobei die zweiten optischen Signale in einem zweiten Vorverarbeitungsschritt einer Vorverarbeitung unterzogen werden, bevor die Analysemethode angewendet wird. Die Vorverarbeitung kann eine Normierung umfassen. Die Normierung dient dazu, bestimmte Schneidparameter, wie z.B. Materialdicke, Geschwindigkeit/Vorschub, Düsendurchmesser, Düsenabstand, Gasdruck, Fokusposition, Magnifikation und/oder Laserleistung zu normieren und damit vergleichbar zu machen. Insbesondere kann der Maximalwert des jeweiligen Parameters auf 1 festgelegt werden. Auch kann die Vorverarbeitung der Bilder eine Gammakorrektur umfassen, insbesondere um sehr dunkle Bildbereiche aufzuhellen. Die Vorverarbeitung kann alternativ oder kumulativ diverse affine Transformationen umfassen, wie Bilddrehung, Schneidrichtung normieren für den spätere Bildvergleich, Zoomen, Beschneiden und/oder Größenveränderung etc.

Alternativ oder kumulativ können die ersten und/oder die zweiten optischen Signale, jeweils im Original und/oder in vorverarbeiteter Form, das Zwischenergebnis des LOC-Watchdogs und/oder der Optimierungsanweisung auf einer Benutzeroberfläche (HMI) ausgegeben werden, wobei die Benutzeroberfläche auf einem elektronischen Gerät ausgebildet ist, das über eine entsprechende Netzwerkanbindung verfügt. Damit kann die Transparenz der angewendeten Verfahren verbessert werden.

Das elektronische Gerät kann auf dem Edge Device ausgebildet sein und/oder auf einem Server, der z.B. über eine Web-Schnittstelle an das Edge Device angeschlossen ist und/oder auf einem mobilen Endgerät und/oder an der Laserschneidmaschine, jeweils mit entsprechender Netzwerkanbindung. Bei der Netzwerkanbindung kann es sich um ein synchrones und vorzugweise um ein asynchrones Protokoll (z.B. MQTT-Broker Schnittstelle) handeln.

Alternativ oder kumulativ kann ein Speicherentscheidungsmodul ausgebildet sein, das ausgebildet ist, zu entscheiden, ob das Zwischenergebnis und/oder das Ergebnis der Analysemethode und/oder die Optimierungsanweisung in einer Speichereinheit gespeichert werden.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Vorrichtung, ein System gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module des Systems bzw. des Produktes ausgebildet und umgekehrt. Die vorstehend im Zusammenhang mit dem Verfahren beschriebenen bevorzugten Ausführungsform der Erfindung werden nicht explizit für die Vorrichtung wiederholt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Einlesen von Signalen" über eine Einleseschnittstelle durchgeführt werden. Um Redundanz zu vermeiden, wird die Vorrichtung deshalb nicht noch einmal explizit beschrieben, obwohl es auch in den alternativen Ausführungsformen, die in Bezug auf das Verfahren beschrieben sind, verwendet werden kann. Grundsätzlich ist die beanspruchte Vorrichtung ausgebildet, das beanspruchte Verfahren auszuführen.

Eine weitere Aufgabenlösung betrifft eine Vorrichtung gemäß dem beiliegenden unabhängigen Anspruch (Vorrichtungsanspruch). Gemäß einem Aspekt ist die Vorrichtung zum Optimieren eines LOC-Watchdogs ausgelegt, wobei der LOC-Watchdog auf einer oder für eine Laserschneidmaschine angewendet werden kann. Die Vorrichtung kann ausgelegt sein, ein Verfahren, wie oben beschrieben, auszuführen. Die Vorrichtung kann ausgebildet sein mit:

- Einer Schnittstelle zu einer optischen Sensoranordnung zum Einlesen von mit der optischen Sensoranordnung erfassten ersten und zweiten optischen Signalen, wobei die optische Sensoranordnung am Laserschneidkopf ausgebildet ist;
- Einem LOC-Watchdog, der dazu ausgelegt ist, eine Erkennungsmethode auf die eingelesenen erfassten ersten optischen Signale auszuführen, um zu abzuschätzen, ob bei einem Schneidprozess ein Schneidverlust, insbesondere in Form von unvollständigen geschnittenen Werkstücken, auftritt oder aufgetreten ist und dies als Zwischenergebnis bereitzustellen und wobei der LOC-Watchdog ausgebildet ist, den Schneidprozess zu unterbrechen und einen Nachschneidebefehl zur Ausführung eines Nachschneideprozesses auszugeben, falls der LOC-Watchdog das Auftreten eines Schneidverlustes abgeschätzt hat;
- Einem Prozessor, wobei der Prozessor ausgebildet ist, folgende Schritte auszuführen, insbesondere falls der LOC-Watchdog das Auftreten eines Schneidverlustes abgeschätzt hat:

  - Einlesen von zweiten optischen Signalen über die Schnittstelle während des Nachschneideprozesses;
  - Anwenden einer Analysemethode auf die ersten und zweiten optischen Signale, um zu bestimmen, ob es sich bei dem Zwischenergebnis des LOC-Watchdog um ein richtig-positives oder falsch-positives Zwischenergebnis handelt;
  - Optimieren der Erkennungsmethode des LOC-Watchdogs, in Antwort auf oder in Abhängigkeit von ein/einem Ergebnis der Analysemethode.

Bei der Schnittstelle kann es sich um eine analoge oder digitale Schnittstelle handeln. Die Schnittstelle ist insbesondere zum Einlesen von den ersten und zweiten optischen Signalen bestimmt. Es kann ein AD-Wandler zur Signal-/Datenkonvertierung vorgesehen sein.

Die Vorrichtung kann optional eine Cloud-Schnittstelle umfassen, insbesondere zu einem Cloud-basierten Server.

Vorzugsweise kann die Vorrichtung eine Steuerschnittstelle zur Laserschneidmaschine umfassen und/oder eine interne oder externe Steuerschnittstelle zu einer Steuerung für die Laserschneidmaschine umfassen.

Die Vorrichtung und insbesondere der Prozessor kann ausgebildet sein, einen Steuerbefehl zur Regelung der Laserschneidmaschine und insbesondere zur Regelung des Nachschneideprozesses der Laserschneidmaschine auszugeben und/oder zur Ausführung auf der Laserschneidmaschine bereitzustellen. Der Steuerbefehl kann auf der Laserschneidmaschine ausgeführt werden. Die Regelung betrifft insbesondere, die Regelung der Rücksetzposition zum Beginn des Nachschneidprozesses, die Regelung der Laserleistung und/oder die Regelung von weiteren Schneidparametern und/oder die Dauer des Nachschneidprozesses.

Eine weitere Lösung der Aufgabe besteht in einem System zum Steuern eines Laserschneidprozesses mit folgenden Komponenten:

- einer Vorrichtung, wie vorstehend beschrieben,
- einer Laserschneidmaschine,
- einer Steuerung für die Laserschneidmaschine und
- vorzugsweise, aber optional einem Cloud-basierten Server mit einem Speicher und datentechnischen Schnittstellen zwischen den jeweiligen Komponenten.

Der Cloud-basierte Server kann als Prozessanalysevorrichtung verstanden werden mit einem Speicher. Insbesondere kann die Analysemethode auf dem Cloud-basierten Server ausgeführt werden. Das mit der Analysemethode nachtrainierte (verbesserte) Modell kann auf die Vorrichtung und/oder die Steuerung der Laserschneidmaschine transferiert werden.

Die Analysemethode kann auf der Vorrichtung und/oder auf dem Cloud-basierten Server implementiert sein.

Die Steuerung kann auf der Vorrichtung implementiert sein oder als separate Komponente und mit allen oder einem Teil der anderen Komponenten in Datenaustausch stehen.

Eine weitere Lösung der Aufgabe besteht in einem Computerprogramm, wobei das Computerprogramm in eine Speichereinheit einer Recheneinheit ladbar ist und Programmcodeabschnitte enthält, um die Recheneinheit zu veranlassen, das Verfahren zum Regeln eines LOC-Watchdogs - wie oben beschrieben - auszuführen, wenn das Computerprogramm in der Recheneinheit ausgeführt wird.

Die Recheneinheit kann in der Vorrichtung implementiert sein. Die Recheneinheit kann auch als Vorrichtung implementiert sein. Das Computerprogramm kann auch verteilt implementiert sein als verteiltes System und teilweise auf der Laserschneidmaschine, der Vorrichtung und/oder dem cloud-basierten Server implementiert sein. Die Recheneinheit kann eine Mensch-Maschine-Schnittstelle (Human machine interface, HMI) umfassen oder mit ihr interagieren, so dass das HMI auf einem mobilen elektronischen Gerät (z.B. Mobilfunktelefon, Smart device, etc.) ausgebildet sein kann.

Kurze Übersicht über die Figuren

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:

Fig. 1 ein Ablaufdiagramm des Verfahrens gemäß einem Ausführungsbeispiel der Erfindung;

Fig. 2 eine schematische Übersichtsdarstellung eines erfindungsgemäßen Systems mit der Vorrichtung zum Optimieren des Watchdogs;

Fig. 3 ein Blockdiagramm mit einer Vorrichtung gemäß einer möglichen Implementierung;

Fig. 4 ein Blockdiagramm mit einer Vorrichtung gemäß einer weiteren möglichen Implementierung;

Fig. 5 eine schematische Darstellung von Signalverläufen während des Schneidprozesses und Nachschneideprozesses in Falle von richtig positiven und falsch positiven Zwischenergebnissen;

Fig. 6 eine Übersichtsdarstellung zur Erfassung der ersten und zweiten optischen Signale während des Schneidprozesses und Nachschneideprozesses;

Fig. 7 eine schematische Darstellung des Prozesslichts während des Schneidprozesses und Nachschneideprozesses;

Fig. 8 eine weitere Darstellung zur Auswertung der erfassten Signale;

Fig. 9 eine Übersicht über das Zusammenwirken von dem ersten und dem zweiten neuronalen Netzwerk; und

Fig. 10 eine Übersicht über eine mögliche Implementierung gemäß einer bevorzugten Ausführungsform der Erfindung.

**Detaillierte Beschreibung der Figuren**

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

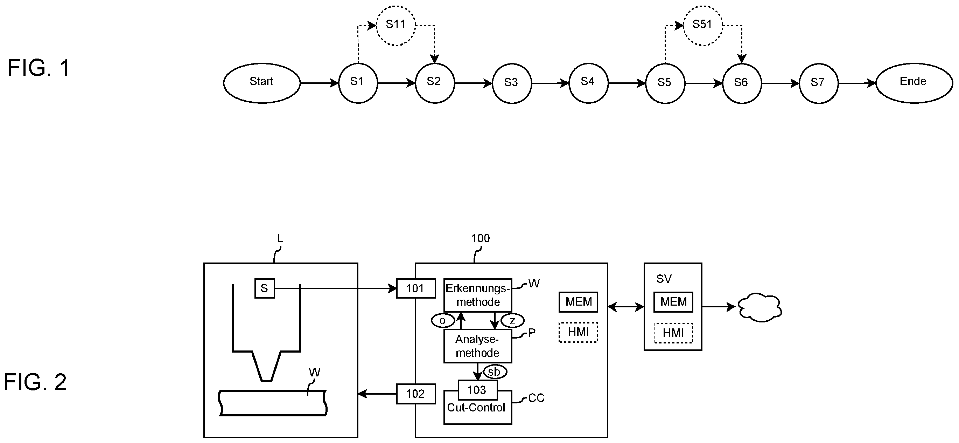

**Fig. 1** zeigt dabei ein Ablaufdiagramm des erfindungsgemäßen Verfahrens zum Optimieren eine LOC-Watchdogs W gemäß einer bevorzugten Ausführungsform der Erfindung. Nach dem Start werden in Schritt S1 die ersten optischen Signale während des Schneidprozesses eingelesen. In einem optionalen Schritt S11 können die eingelesenen ersten optischen Signale einer Vorverarbeitung, insbesondere einer Bildverarbeitung, Schritt S11, unterzogen werden, beispielsweise Größenveränderung, Zooming, Normierung, Kontrastveränderung, Helligkeitsanpassung etc. Danach erfolgt in Schritt S2 eine Auswertung der eingelesenen ersten optischen Signale mit dem LOC-Watchdog W. Der LOC-Watchdog W stellt nach Anwendung der Erkennungsmethode ein Zwischenergebnis z bereit. Falls der LOC-Watchdog W das Auftreten eines Schneidverlustes im Zwischenergebnis z als wahrscheinlich abgeschätzt hat, wird in Schritt S3 der Schneidprozess unterbrochen und in Schritt S4 wird ein Nachschneidebefehl zur Ausführung eines Nachschneideprozesses ausgegeben. In Schritt S5 erfolgt das Einlesen von zweiten optischen Signalen während des Nachschneideprozesses. Optional können die eingelesenen zweiten optischen Signale einer fakultativen Vorverarbeitung zugeführt werden. Dies erfolgt in Schritt S51. Da die Schritte S11 und S51 optional sind, sind diese in Figur 1 als gestrichelte Linie gekennzeichnet. In Schritt S6 erfolgt die Anwendung eines weiteren Verfahrens, nämlich eine Analysemethode, auf die ersten und zweiten optischen Signale, um zu bestimmen, ob es sich bei dem Zwischenergebnis, das der LOC-Watchdog W bereitgestellt hat, um ein richtig positives oder falsch positives Zwischenergebnis handelt. Danach kann das Verfahren beendet werden oder erneut ausgeführt werden.

**Fig. 2** zeigt in einer schematischen Darstellung das erfindungsgemäße System in einer vorteilhaften Ausführung. Die Laserschneidmaschine L ist auf der linken Seite in Figur 2 schematisch dargestellt und umfasst den Schneidkopf, an dem eine Sensoranordnung S angeordnet ist. Die Sensoranordnung S dient zur Erfassung von optischen Signalen. Die Sensoranordnung S kann aus einer Fotodiode und ortsaufgelöst aus einem 2-D Sensor (zum Beispiel CMOS Kamera und/oder neuromorphische Kamera) bestehen. Die erfassten ersten und/oder zweiten optischen Signale repräsentieren das Prozesslicht während des Schneidprozesses und/oder des Nachschneideprozesses.

Die Vorrichtung 100 dient zum Optimieren des LOC-Watchdogs W, der vorzugsweise auf der Vorrichtung 100 implementiert sein kann, aber nicht sein muss. Der LOC-Watchdog W führt eine Erkennungsmethode aus. Die Erkennungsmethode kann in Software, insbesondere als zweites neuronales Netz, ausgebildet sein. Weiterhin umfasst die Vorrichtung 100 einen Prozessor P. Der Prozessor P ist ausgebildet, eine Analysemethode auszuführen. Die Analysemethode kann in Software, insbesondere als erstes neuronales Netz, ausgebildet sein. Der LOC-Watchdog W stellt nach Anwendung der Erkennungsmethode ein Zwischenergebnis z bereit. Das System umfasst des Weiteren eine Steuereinheit, z.B. in Form eines Cut-Controlmoduls CC, das beispielsweise als speicherprogrammierbare Steuerung (SPS) ausgebildet sein kann. Das Cut-Controlmodul CC kann auf der Vorrichtung 100 implementiert sein. Kumulativ oder alternativ kann das Cut-Controlmodul CC auch auf einer separaten Rechnerinstanz implementiert sein, die mit der Vorrichtung 100 und/oder mit der Laserschneidmaschine L in Datenaustausch steht oder auf der Laserschneidmaschine L implementiert ist.

Nach Anwendung der Analysemethode auf dem Prozessor P können Steuerbefehle sb über eine Schnittstelle 103 an das Cut-Controlmodul CC zur Steuerung der Laserschneidanlage bereitgestellt werden. Die Steuerbefehle sb können z.B. über eine Schnittstelle 102 zwischen der Vorrichtung 100 und der Laserschneidmaschine L an die Laserschneidmaschine L zum Schneiden und/oder Nachschneiden des Werkstückes W übermittelt werden.

Nach Anwendung der Analysemethode auf den Prozessor P kann eine Optimierung der Erkennungsmethode in Antwort auf ein Ergebnis der Analysemethode ausgeführt werden. Falls die Erkennungsmethode als ein zweites neuronales Netz ausgebildet ist, kann das Optimieren die Ausgabe von Optimierungsbefehlen o umfassen. Die Optimierungsbefehle o werden an den LOC-Watchdog W zum Nachtraining desselben ausgegeben. Insbesondere können die Optimierungsbefehle o einen Nachtrainingsdatensatz umfassen oder indizieren, wie die Gewichte des zweiten neuronalen Netzwerkes verändert werden müssen, um den Optimierungen zu genügen.

In einer vorteilhaften Variante kann die Vorrichtung 100 ein Speicherentscheidungsmodul SEM umfassen, das ausgebildet ist, zu entscheiden, ob Datensätze, insbesondere die ersten und/oder zweiten optischen Signale und/oder das Zwischenergebnis z der Erkennungsmethode und/oder das Ergebnis der Analysemethode an einen zentralen Server SV übertragen werden. Bei dem Server SV kann es sich um einen Cloud-basierten Server handeln, der über entsprechende Speicherstrukturen MEM verfügt. Des weiteren kann eine Benutzerschnittstelle HMI an der Laserschneidmaschine L, auf der Vorrichtung 100 und/oder auf dem Server SV ausgebildet sein. Die Benutzerschnittstelle HMI kann alternativ oder kumulativ ebenfalls auf der Laserschneidmaschine L ausgebildet sein. Da dies optionale Implementierungen sind, ist dies in Figur 2 wieder gestrichelt gekennzeichnet. Der Server SV kann auch im Netzwerk der Laserschneidmaschine ausgebildet sein, also on-premise. Alternativ kann der Server SV über eine externe Netzwerkverbindung (z.B http(s)-Protokoll-basiert) als zentrale Recheninstanz, z.B. für mehrere Produktionsanlagen mit Laserschneidmaschinen L ausgebildet sein.

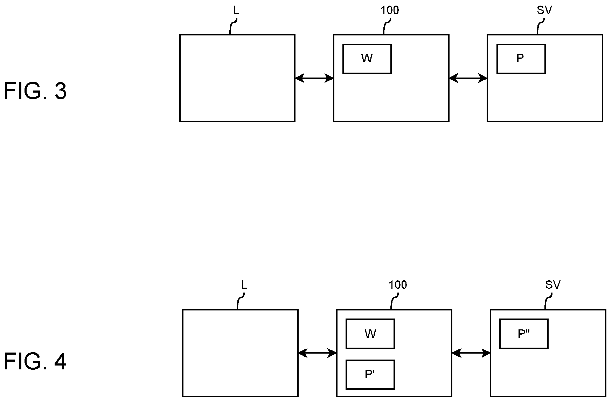

Fig. 3 zeigt eine schematisches Blockdiagramm des erfindungsgemäßen Systems, bei dem der LOC-Watchdog W auf der Vorrichtung 100 und der Prozessor P auf dem Server SV ausgebildet ist. Die jeweiligen Komponenten, wie die Laserschneidmaschine L, die Vorrichtung 100 und/oder der Server SV stehen über entsprechende Datenleitungen in Datenaustausch (drahtgebunden oder drahtlos, beispielsweise Funk-Schnittstellen, WLAN oder Internet).

Grundsätzlich kann es vorgesehen sein, dass der LOC-Watchdog W und den Prozessor P auf der Vorrichtung 100 implementiert ist.

Wie Fig. 4 zeigt, kann es weiter alternativ vorgesehen sein, dass der Prozessor P als verteiltes System ausgebildet ist, und ein erster Teil P' des Prozessors auf der Vorrichtung 100 implementiert ist und ein zweiter Teil P" des Prozessors auf dem Server SV implementiert ist.

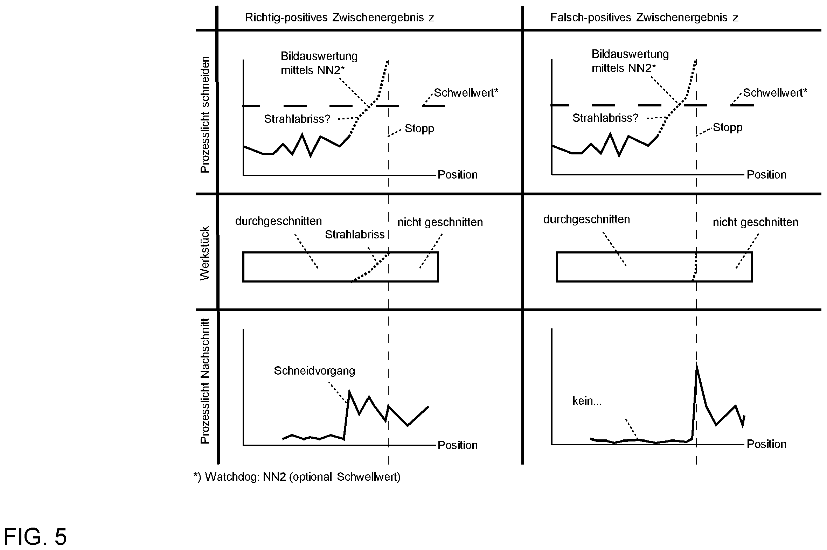

**Fig. 5** zeigt in vereinfachter Form Signalverläufe als Ergebnisse des Schneid- und Nachschneidprozesses, jeweils im Fall eines falsch positiven und richtig positiven Bewertung (als Zwischenergebnis z) durch die Erkennungsmethode des LOC-Watchdog W. Wie auf der linken Seite dargestellt, handelt es sich um richtig positive Bewertung, d.h. die Erkennungsmethode hat richtigerweise einen Schneidverlust, in Form einer unvollständig geschnittenen Kontur vorausgesagt. In diesem Fall kommt es im Bereich des LOC zu einem Nachschneidvorgang, der Prozesslicht auslöst, das beim Nachschneiden (links unten in Fig. 5) sichtbar bzw. repräsentiert ist. Auf der rechten untere Seite sieht man, dass im Fall eines falsch positiven Zwischenergebnisses, kein Prozesslicht beim Nachschneiden mehr auftritt, da bereits vollständig durchgeschnitten war. In der oberen Darstellung in Fig. 5 ist das Prozesslicht beim Schneidprozess (erste optische Signale) dargestellt und in der unteren Darstellung in Fig. 5 das Prozesslicht beim Nachschneiden (Re-Cut, zweite optische Signale). In der mittleren Darstellung in Fig. 5 ist das Werkstück auf schematische Weise dargestellt. Auf der linken Seite der Werkstückdarstellung ist das vollständig durchgeschnittene Werkstück dargestellt und dann folgt der Strahlabriss und rechts davon ist das Werkstück noch nicht vollständig durchtrennt.

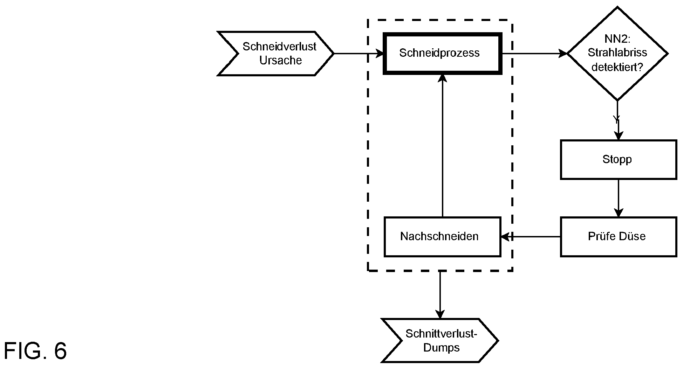

**Fig. 6** zeigt, dass die ersten und weiten optischen Signale sowohl vom Schneidprozess als auch vom Nachschneidprozess gespeichert werden. Insbesondere kann der von einem einzelnen Schneidverlust-Ereignis erzeugte Speicherinhalt (bzw. Dump) aus optional Metadaten (Parameter), optional Sensordaten (CutControl, Achsdaten...) und zwingend den ersten und zweiten optischen Signalen, also den Kamerabildern bestehen.

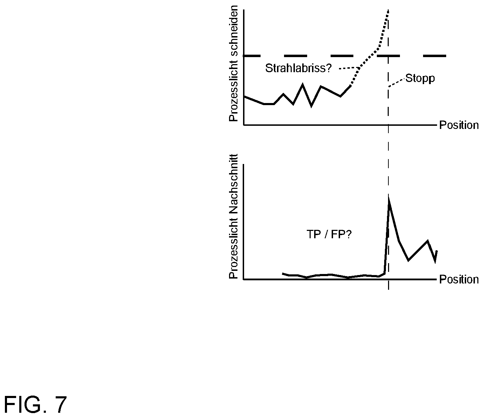

In **Fig. 7** sind die unterschiedlichen Signalverläufe gezeigt. Digitale LOC-Ereignisse, sogenannte dumps, werden verwendet, um verschiedene Arten von Daten in einer einzigen Datei (z. B..zip) zu sammeln/archivieren. Ein Steuerungsdienst erzeugt verschiedene Ereignisse, um Dump-Dateien zu generieren. Dumps können Daten von mehr als einem Ereignis enthalten (z. B. loc und re-cut/Nachschneiden). Die Dumps werden auf einer Recheneinheit, insbesondere einer intelligente Steuervorrichtung, gespeichert und an einen Edgeknoten gesendet, wo sie für maschinelles Lernen in eine Cloud (z.B. cloud-basierter Server SV) hochgeladen werden können. Die Vorrichtung 100 kann als Edgeknoten ausgebildet sein. Wenn der LOC-Watchdog einen Alarm ausgibt, sind die letzten Daten der bevorstehenden LOC-Schneidphase interessant. Die Datensammlung umfasst deshalb für eine bestimmte vorkonfigurierbare Zeitspanne folgende Inhalte:

- Von der Kamera aufgenommene Prozesslichtbilder in Form von ersten und zweiten optischen Signalen und optional Aufnahmeeinstellungen (z.B. Belichtung, Verstärkung);

- Extrahierte Merkmale der Bilder (bereitgestellt durch maschinelles Lernen und/oder konventionelles Sehen, klassische Bildverarbeitung);

- Zeitreihendaten wie Cut-Controlmodul Signale (z.B. Fotodiode zur Messung des Prozesslichts), xyz-Trajektorie der Maschine, Gasdruckwert, Düsenabstand (kapazitiver Sensor), Temperaturwerte, Fokuspositionswert...und/oder

- optional: Schneidparameter (Laserleistung, Geschwindigkeit, Düse, Düsenabstand, Gas (Druck/Typ), Fokusposition, Materialstärke und -typ...)

- optional: Maschinenkonfiguration (Seriennummer und Versionen der Hardware/Software-Einheiten).

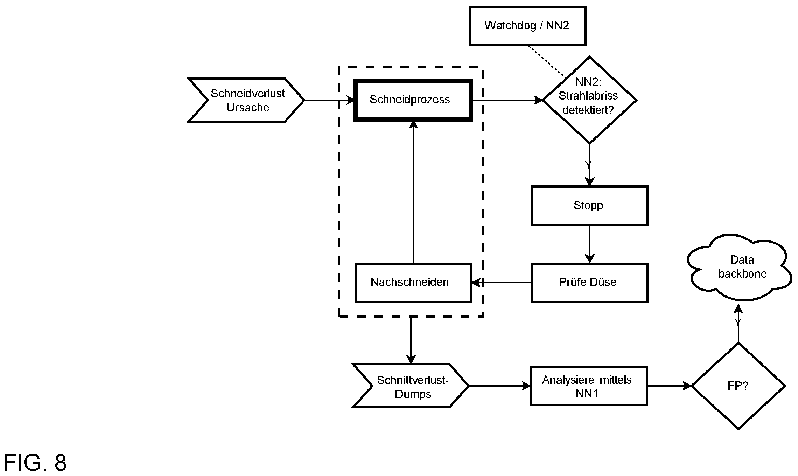

**Fig. 8** zeigt ein Ausführungsbeispiel, bei dem die Analysemethode als erstes neuronales Netzwerk NN1 und die Erkennungsmethode als zweites neuronales Netzwerk NN2 ausgebildet sind. Bei einem falsch positiven Ergebnis der Analysemethode können die relevanten Daten (dumps) in einen Speicher, insbesondere data backbone, gespeichert werden.

Grundsätzlich bestätigt das erste neuronale Netzwerk, NN1, die Vorhersage des zweiten neuronalen Netzwerkes, NN2, true positive/richtig positiv (TP) oder stellt ein falsch positives, false positive, Ergebnis FP fest, falls die Re-cut Daten den Abriss nicht bestätigen.

Das zweite neuronale Netzwerk, NN2, (auf dem LOC-Watchdog W implementiert) schätzt kontinuierlich anhand der ersten optischen Signale (während des Schneidprozesses) die Wahrscheinlichkeit für einen Schneidverlust oder Abriss. Ist die Wahrscheinlichkeit hoch (über einer vorkonfigurierbaren Schwelle, erfolgt ein Stopp des Lasers/Schneiden verbunden mit eine Nachschneidbefehl, Re-Cut.

Vorzugsweise wird ein Ansatz für das maschinelle Lernen bzw. für die neuronalen Netzwerke verwendet, der mehrere Merkmale verarbeiten kann (multi-feature Ansatz). Ein neuronales Netz, insbesondere ein Convolutional Neural Network, CNN (z. B. Resnet, MobileNet, ...) extrahiert in der Regel hervorragend Merkmale, um Bilder mit und ohne Schittverlust, LOC, zu klassifizieren. Die Merkmale aus den CNN-Filtern werden in vollverknüpfte Schichten eingespeist, wo die Klassifizierung erfolgt.

Ausgehend von Zeitreihen, die von Schneidexperten beschriftet werden können (LOC vorhanden, nicht vorhanden), wird ein neuronales Netz NN1 zur automatischen Klassifizierung von richtig positiven, true positives, TP, oder falsch positiven, false positives, FP, in die Vorrichtung 100, die als Edge Gerät ausgebildet sein kann, eingeführt.

Aus den gesammelten und gekennzeichneten/gelabelten Daten (dumps) wird ein zweites neuronales Netzwerk, NN2, die Wahrscheinlichkeit aus Kamerabildern vorhersagen (falls sinnvoll können auch Metadaten und Sensorwerte an die Netzwerkeingänge übergeben werden).

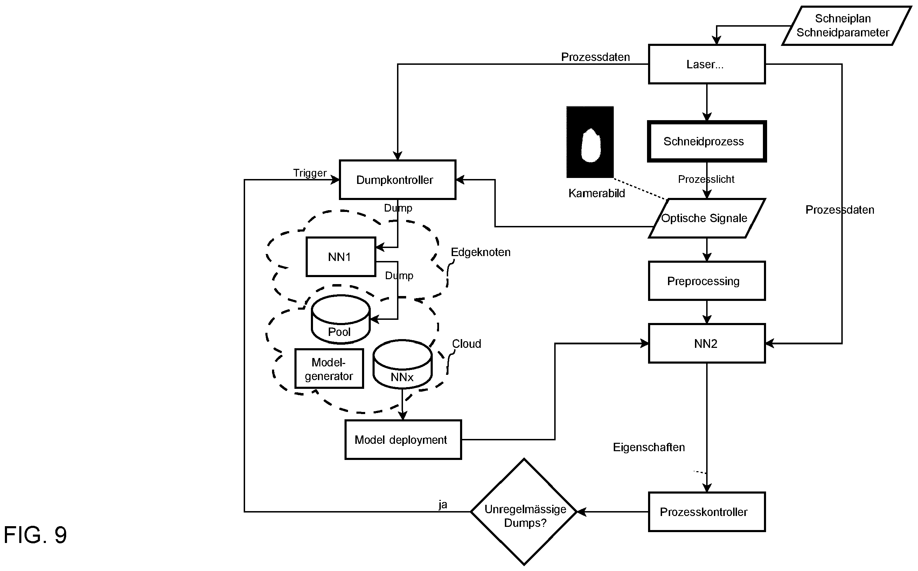

**Fig. 9** zeigt, dass das erste neuronale Netzwerk, NN1, in einem Edgeknoten implementiert sein kann, so dass ein Speicherinhalt, dump, analysiert und asynchron in die Cloud (Backbone) geladen werden kann. Die Edge ist eine lose gekoppelte Umgebung, die z.B. auch auf ByBrain läuft. Der gewählte Ansatz für die lockere Kopplung ist ein MQTT-Broker. Da der Edgeknoten nicht in Echtzeit arbeitet, können moderne Programmiersprachen wie Python verwendet werden, um komplexe Datenanalysen durchzuführen. Der Edgeknoten, insbesondere das Speicherentscheidungsmodul SEM entscheidet, ob Dumps verworfen oder in eine Cloud (Backbone, SV) hochgeladen werden sollen.

Das zweite neuronale Netzwerk, NN2 erhält die, vorzugsweise vorverarbeiteten, ersten optischen Signale (Bilder) und verarbeitet die Daten in Echtzeit.

Wenn die Empfindlichkeit zu hoch ist, könnte falsch positive Ergebnisse die Produktion stören. In diesem Fall werden "unregelmäßige Dumps" im Daten-Backbone gesammelt. Nach einem Nachtraining durch die Optimierung können die aktualisierten Modelle an den Schneidemaschinen eingesetzt werden.

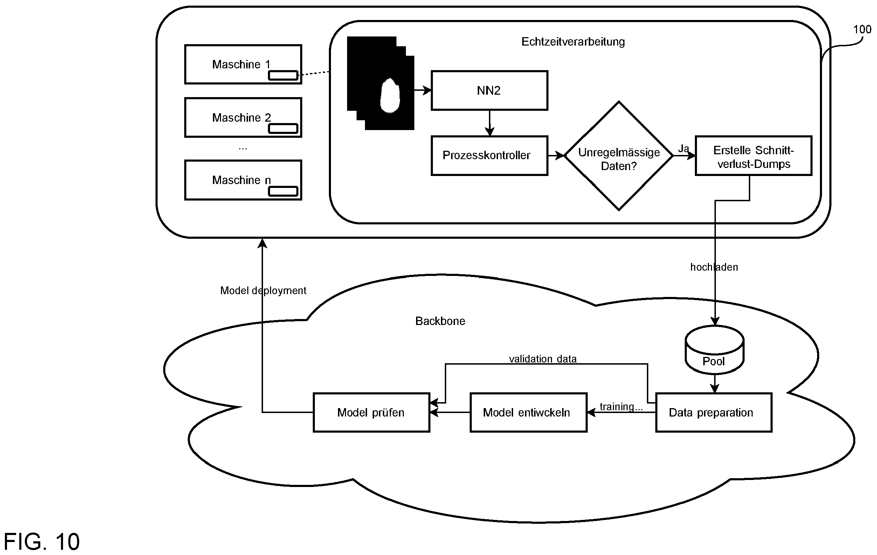

**Fig. 10** zeigt eine mögliche Implementierung des cyberphysikalischen Laserschneidsystems.

Aus kompletten gespeicherten Dokumentationen, dumps, mit "regular cut / loc" und "re-cut" werden die CutControl- und Positionswerte extrahiert. Die Vorhersage der "Loc-Wahrscheinlichkeit" ist nicht sehr schwierig, wenn beide Zeitreihen zusammen behandelt (fusioniert) werden. Vorzugsweise wird ein fusionierter Datensatz aus ersten und zweiten optischen Signalen (ortskorreliert) verarbeitet.

Vorzugsweise erfolgt der Re-Cut, das Nachschneiden, auf derselben Trajektorie, auf der der LOC während des Schneidens, erkannt wurde.

Nachdem mehrere "Schneidverlust-Dumps" gesammelt wurden, wird ein neuronales Netz (insbesondere das erste neuronale Netz, NN1) trainiert, um die Wahrscheinlichkeit eines Schneidverlusts (Ereignisses) vorherzusagen.

Anschließend wird das Netz auf einer Laserschneidmaschine L mit einer intelligenten Steuerung eingesetzt, um die Wahrscheinlichkeit vorherzusagen - parallel zum CutControl-Sensor. Als nächstes müssen mehr Daten von Feldtestkunden gesammelt und die Empfindlichkeit und Präzision verbessert werden. Als Nächstes wird CutControl vollständig durch ein Erkennungsverfahren mit mehreren Merkmalen (insbesondere ein zweites neuronales Netzwerk, NN2) ersetzt.

Es können 3 Prozessphasen ausgebildet sein:

A, normaler Schneidvorgang: 1s bis 100ms vor dem LOC-Ereignis - Daten werden für das Labeling gespeichert.
B, Abrissphase: Die letzten 100ms vor dem LOC-Ereignis - die Schneidsignale bilden die ersten optischen Signale. Örtlich überlappt sich B mit dem Re-Cut (zweite optischen Signale).
C, Fortsetzung Schneidvorgang: Dauer von 100ms ab LOC-Position - nur Daten von re-cut.
B: Aus den Dumps zu extrahieren: Koordinaten x, y und das CutControl (cc)

$$B_{cut} = [x, y, cc_{loc}], B_{re\text{-}cut} = [x, y, cc_{re\text{-}cut}].$$

In einem Vorverarbeitungsschritt, nach 2D-Interpolation $B=[x, y, cc_{loc}, cc_{re\text{-}cut}]$.
Die Position wird lediglich zum Zusammenführen von loc und re-cut verwendet, und kann deshalb weggelassen werden:

$$B = [cc_{loc}, cc_{re\text{-}cut}].$$

C: Ähnlich für den nicht überlappenden Rückschnitt: $C = [cc_{re\text{-}cut}]$
Falls die Abtastrate beim CutControl 1kHz beträgt, haben die Vektoren eine Länge von 100. B verfügt über 2 örtlich synchronisierte Vektoren (ersten und zweiten optischen Signalen), während C lediglich aus zweiten optischen Signalen besteht.
Die Klassifizierung des ersten neuronalen Netzes basiert auf einem trainierten Label der LOC-Wahrscheinlichkeit (FP = 0, TP = 1). Vor dem Trainieren muss das Label von einer Person bestimmt werden, die Erfahrung im Laserschneiden hat.
Die Kennzeichnungen können zusammen mit den Eingabedaten B und C verwendet werden, um ein Modell, z.B. ein LSTM, zu trainieren.

| Input 1: B | Input 2: C |
|---|---|
| LSTM | LSTM |
| Dense(64) BatchNormalizationQ ActivationQ | Dense(64) BatchNormalizationQ ActivationQ |
| Dense(32) BatchNormalizationQ ActivationQ | Dense(32) BatchNormalizationQ ActivationQ |
| Dense(2) BatchNormalizationQ ActivationQ | Dense(2) BatchNormalizationQ ActivationQ |
| Flatten | Flatten |
| Dense(2) BatchNormalizationQ ActivationQ | |
| Dense(1) ActivationQ | |
| **Output: Probability loc** | |

Um die Robustheit zu verbessern, kann CutControl durch andere Signale ersetzt werden oder es können zusätzliche Informationen hinzugefügt werden.
Alternative Ausführungsformen sind:

- Die Schnittrichtung kann zu B und C als kontinuierliches sin / cos Signal hinzugefügt werden und/oder

$$B = [\sin, \cos, cc_{loc}, cc_{re\text{-}cut}], C = [\sin, \cos, cc_{re\text{-}cut}].$$

- Normalisierte Parameter können als Input 3 hinzugefügt werden:
  P = [thickness, speed, nozzleDiameter, nozzleDistance, gasPressure, focalPosition, magnification, laserPower]

- CutControl kann durch die Intensität oder andere Merkmale der Bilder ersetzt werden.

- Vorverarbeitete Bilder könnten direkt als Eingabe gegeben werden. In diesem Fall könnte ein Faltungsneuronales Netz CNN verwendet werden. Für Zeitreihen können die bekannten Technologien RNN, CNN+LSTM verwendet werden.

Wegen der Fluktuation im Laserprozess würde ein einzelnes Bild niemals eine akzeptable Genauigkeit liefern. Daher muss die Chronologie der ersten und zweiten optischen Signale berücksichtigt werden.

Der derzeitige Ansatz aus dem Stand der Technik mit dem Schwellenwert in CutControl ist einfach - hat aber seine Grenzen. Nichtsdestotrotz kann er dazu verwendet werden, Daten zu sammeln - und ein Kennzeichen /Label vorzuschlagen, das von Schneidexperten oder von dem ersten neuronalen Netzwerk, NN1, validiert werden muss.

Die Arbeit mit Bildern und einem neuronalen Netz, das mehrere Merkmale extrahiert, wird die Genauigkeit verbessern. Das zweite neuronale Netzwerk NN2 könnte vereinfacht wie folgt aussehen:

| Input: img_1 | Input: img_2 | Input: img_n |
|---|---|---|
| Conv2D | Conv2D | Conv2D |
| Conv2D | Conv2D | Conv2D |
| Flatten | Flatten | Flatten |
| LSTM | | |
| Dense | | |
| Dense | | |
| Activation | | |
| **Output: Probability loc** | | |

Die Bilder [1, 2, ..., n] werden nacheinander verarbeitet - nach der Vorverarbeitung. Das Conv2D extrahiert Merkmale aus einem Bild, stattdessen kann auch ein tiefes Modell wie MobileNet verwendet werden.

Nach der Verflachung, flatten, werden die Vektoren an das Long Short Time Memory LSTM weitergeleitet. LSTM ist eine Schicht, die mehrere chronologische Eingaben verarbeiten kann, um die Essenz zu finden.

Die Informationen aus dem LSTM müssen mit Hilfe von vollständig verknüpften Dense-Schichten gefiltert werden, um die Vorhersage der Wahrscheinlichkeit zu erhalten.

Das zweite neuronalen Netzwerks NN2 überwacht als LOC-Watchdog den Schneidvorgang. Im Fall eines Strahlabrisses muss ein unmittelbarer Stopp innert wenigen Millisekunden erfolgen, um negative die Konsequenzen an Werkstück und Verschleissteilen an Maschine (z. B. Düse) zu minimieren. In der technischen Umsetzung müssen somit vorzugsweise 300 Bilder pro Sekunde in Echtzeit verarbeitet werden können, was einerseits ein auf Durchsatz optimierten NN2' erfordert und andererseits eine performante Verarbeitungs-Leistung (CPU/GPU) erfordert.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

**Patentansprüche**

1. Verfahren zum Optimieren eines LOC-Watchdogs (W) für eine Laserschneidmaschine (L), wobei das Verfahren folgende Verfahrensschritte umfasst:

   - Einlesen (S1) von ersten optischen Signalen während eines Schneidprozesses;

- Auswerten (S2) der ersten optischen Signale mit dem LOC-Watchdog (W), der dazu ausgelegt ist, eine Erkennungsmethode auszuführen, um eine Wahrscheinlichkeit abzuschätzen, ob bei einem Schneidprozess ein Schneidverlust, insbesondere in Form von unvollständigen geschnittenen Werkstücken auftritt oder aufgetreten ist und diese Abschätzung als Zwischenergebnis (z) bereitzustellen;
- Falls der LOC-Watchdog (W) das Auftreten eines Schneidverlustes im Zwischenergebnis (z) als wahrscheinlich abgeschätzt hat:

  - Unterbrechen (S3) des Schneidprozesses und Ausgeben (S4) eines Nachschneidebefehls zur Ausführung eines Nachschneideprozesses;
  - Einlesen (S5) von zweiten optischen Signalen während des Nachschneideprozesses;
  - Anwenden (S6) einer Analysemethode auf die ersten und zweiten optischen Signale, um zu bestimmen, ob es sich bei dem Zwischenergebnis (z) des LOC-Watchdog (W) um ein richtig-positives oder falsch-positives Zwischenergebnis handelt.
  - Optimieren (S7) der Erkennungsmethode des LOC-Watchdogs (W), in Antwort auf ein Ergebnis der Analysemethode.

2. Verfahren nach Anspruch 1, wobei der Nachschneideprozess exakt auf derselben Schneidbahn erfolgt wie der Schneidprozess, der unterbrochen wurde.

3. Verfahren nach einem der vorangehenden Ansprüche, wobei das Verfahren folgenden Schritt umfasst.

   - Kennzeichen der ersten optischen Signale mit einem Label, das ausgewählt ist aus der Gruppe, bestehend aus: richtig positiv und falsch positiv.

4. Verfahren nach einem der vorangehenden Ansprüche, wobei der Nachschneideprozess in derselben Richtung oder in entgegengesetzter Richtung wie der Schneidprozess erfolgt.

5. Verfahren nach einem der vorangehenden Ansprüche, wobei die Analysemethode als post-processing und insbesondere nach dem Schneidprozess und nach dem Nachschneideprozess ausgeführt wird und/oder ein erstes trainiertes neuronales Netzwerk ist oder umfasst (NN1), welches bestimmt, ob es sich bei dem Zwischenergebnis (z) um ein richtig-positives oder falsch-positives Zwischenergebnis handelt.

6. Verfahren nach dem unmittelbar vorangehenden Anspruch, wobei Eingangsdaten für das erste neuronale Netzwerk (NN1) die ersten optischen Signale und die zweiten optischen Signale umfassen.

7. Verfahren nach einem der Ansprüche 5 oder 6, wobei Trainingsdaten für das erste neuronale Netzwerk (NN1) die ersten optischen Signale in gekennzeichneter Form und die zweiten optischen Signale umfassen, wobei ein Erkennungskennzeichen der ersten optischen Signale in gekennzeichneter Form ein richtig-positiv Kennzeichen oder ein falsch-positiv Kennzeichen für zumindest die ersten optischen Signale ist.

8. Verfahren nach Anspruch 7, wobei das Erkennungszeichen automatisch erzeugt wird, insbesondere auf Basis einer Auswertung der zweiten optischen Signale und/oder auf Basis des Ergebnisses der Analysemethode.

9. Verfahren nach einem der vorangehenden Ansprüche, wobei die Abschätzung der Wahrscheinlichkeit eines möglichen Schneidverlustes durch den LOC-Watchdog online und insbesondere während des Schneidprozesses ausgeführt wird und/oder ein zweites trainiertes neuronales Netzwerk (NN2) umfasst oder ist.

10. Verfahren nach dem unmittelbar vorangehenden Anspruch, wobei die Eingangsdaten für das zweite neuronale Netzwerk (NN2) die ersten optischen Signale umfassen.

11. Verfahren nach einem der Ansprüche 9 oder 10, wobei die Trainingsdaten für das zweite neuronale Netzwerk (NN2) die ersten optischen Signale in gekennzeichneter Form umfassen, wobei ein Analysekennzeichen der ersten optischen Signale in gekennzeichneter Form eine Wahrscheinlichkeit für einen Schneidverlust ist.

12. Verfahren nach einem der vorangehenden Ansprüche, wobei die Erkennungsmethode des LOC-Watchdog (W) zusätzlich ausgebildet ist, eine Rücksetzposition auf Basis der Auswertung der ersten optischen Signale zu berechnen.

13. Vorrichtung (100) zum Optimieren eines LOC-Watchdogs (W) für eine Laserschneidmaschine (L), wobei die Vorrichtung (100) ausgelegt ist, ein Verfahren nach einem der vorangehenden Verfahrensansprüche auszuführen, mit:

- Einer Schnittstelle (101) zu einer optischen Sensoranordnung (S) zum Einlesen von mit der optischen Sensoranordnung (S) erfassten ersten und zweiten optischen Signalen, wobei die optische Sensoranordnung (S) am Laserschneidkopf ausgebildet ist;
- Einem LOC-Watchdog (W), der dazu ausgelegt ist, eine Erkennungsmethode auf die eingelesenen erfassten ersten optischen Signale auszuführen, um zu abzuschätzen, ob bei einem Schneidprozess ein Schneidverlust, insbesondere in Form von unvollständigen geschnittenen Werkstücken, auftritt oder aufgetreten ist und dies als Zwischenergebnis (z) bereitzustellen und wobei der LOC-Watchdog (W) ausgebildet ist, den Schneidprozess zu unterbrechen und einen Nachschneidebefehl zur Ausführung eines Nachschneideprozesses auszugeben, falls der LOC-Watchdog (W) das Auftreten eines Schneidverlustes abgeschätzt hat;
- Einem Prozessor (P), wobei der Prozessor (P) ausgebildet ist, folgende Schritte auszuführen, falls der LOC-Watchdog (W) das Auftreten eines Schneidverlustes abgeschätzt hat:

  ■ Einlesen von zweiten optischen Signalen über die Schnittstelle (101) während des Nachschneideprozesses;
  ■ Anwenden einer Analysemethode auf die ersten und zweiten optischen Signale, um zu bestimmen, ob es sich bei dem Zwischenergebnis (z) des LOC-Watchdog (W) um ein richtig-positives oder falsch-positives Zwischenergebnis handelt;
  ■ Optimieren der Erkennungsmethode des LOC-Watchdog (W), in Antwort auf ein Ergebnis der Analysemethode.

14. System zum Steuern eines Laserschneidprozesses mit folgenden Komponenten:

- einer Vorrichtung (100) nach Anspruch 13,
- einer Laserschneidmaschine (L),
- einer Steuerung für die Laserschneidmaschine (L) und
- optional einem Cloud-basierten Server (SV) mit einem Speicher (MEM) und datentechnischen Schnittstellen zwischen den jeweiligen Komponenten.

15. Computerprogramm, wobei das Computerprogramm in eine Speichereinheit einer Recheneinheit ladbar ist und Programmcodeabschnitte enthält, um die Recheneinheit zu veranlassen, das Verfahren zum Regeln eines LOC-Watchdogs (W) gemäß einem der vorangehenden Verfahrensansprüche auszuführen, wenn das Computerprogramm in der Recheneinheit ausgeführt wird.

FIG. 1

Start → S1 → S2 → S3 → S4 → S5 → S6 → S7 → Ende

S11 (S1 → S2)
S51 (S5 → S6)

FIG. 2

100
101
Erkennungs-methode — W
O, Z — P
Analyse-methode
Sb
103 Cut-Control — CC
102
MEM
HMI
SV
MEM
HMI
L
S
W

FIG. 3

L     100     SV

W     P

FIG. 4

L     100     SV

W     P"

P'

FIG. 5

| | Richtig-positives Zwischenergebnis z | Falsch-positives Zwischenergebnis z |
|---|---|---|
| Prozesslicht schneiden | Bildauswertung mittels NN2* — Schwellwert* — Strahlabriss? — Stopp — Position | Bildauswertung mittels NN2* — Schwellwert* — Strahlabriss? — Stopp — Position |
| Werkstück | durchgeschnitten — Strahlabriss — nicht geschnitten | durchgeschnitten — nicht geschnitten |
| Prozesslicht Nachschnitt | Schneidvorgang — Position | kein... — Position |

*) Watchdog: NN2 (optional Schwellwert)

EP 4 495 720 A1

18

FIG. 6

FIG. 7

FIG. 8

FIG. 9

FIG. 10

Europäisches
Patentamt

European
Patent Office

Office européen
des brevets

## EUROPÄISCHER RECHERCHENBERICHT

**Nummer der Anmeldung**

EP 23 18 6327

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2020 209000 A1 (OKUMA MACHINERY WORKS LTD [JP]) 21. Januar 2021 (2021-01-21) * Absatz [0006] * ----- | 1-15 | INV. G05B19/406 ADD. B23K26/03 |
| A | US 2019/033824 A1 (YONTAY PETEK [US] ET AL) 31. Januar 2019 (2019-01-31) * Zusammenfassung * ----- | 1-15 | |
| A | EP 3 412 399 B1 (BYSTRONIC LASER AG [CH]) 28. April 2021 (2021-04-28) * Absatz [0044] - Absatz [0045] * ----- | 1-15 | |

RECHERCHIERTE
SACHGEBIETE (IPC)

G05B
B23K

Der vorliegende Recherchenbericht wurde für alle Patentansprüche erstellt

| Recherchenort | Abschlußdatum der Recherche | Prüfer |
|---|---|---|
| Den Haag | 2. Januar 2024 | Lefeure, Guillaume |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 23 18 6327

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**02-01-2024**

| Im Recherchenbericht angeführtes Patentdokument | Datum der Veröffentlichung | Mitglied(er) der Patentfamilie | | Datum der Veröffentlichung |
|---|---|---|---|---|
| DE 102020209000 A1 | 21-01-2021 | CN | 112241144 A | 19-01-2021 |
|  |  | DE | 102020209000 A1 | 21-01-2021 |
|  |  | JP | 7187397 B2 | 12-12-2022 |
|  |  | JP | 2021018537 A | 15-02-2021 |
|  |  | US | 2021019958 A1 | 21-01-2021 |
| US 2019033824 A1 | 31-01-2019 | US | 2019033824 A1 | 31-01-2019 |
|  |  | WO | 2017138948 A1 | 17-08-2017 |
| EP 3412399 B1 | 28-04-2021 | EP | 3159093 A1 | 26-04-2017 |
|  |  | EP | 3412399 A1 | 12-12-2018 |
|  |  | PL | 3159093 T3 | 31-12-2018 |
|  |  | PL | 3412399 T3 | 25-10-2021 |
|  |  | US | 2017113300 A1 | 27-04-2017 |
|  |  | US | 2020254559 A1 | 13-08-2020 |

EPO FORM P0461

Für nähere Einzelheiten zu diesem Anhang : siehe Amtsblatt des Europäischen Patentamts, Nr.12/82